# FASCICULE DE BREVET EUROPEEN

(11) **EP 2 466 084 B1**
(45) Date de publication et mention de la délivrance du brevet: **16.11.2016**
(21) Numéro de dépôt: 11190356.3
(22) Date de dépôt: 23.11.2011
(51) Int. Cl.: F01N 3/035, F01N 3/10, F01N 3/20, F01N 3/28, F01N 13/00, F01N 13/18

(54) **Ligne d'échappement pour véhicule automobile**
Abgassystem für ein Kraftfahrzeug
Exhaust system for an automotive vehicle

(30) Priorité: 14.12.2010 FR 1060519
(43) Date de publication de la demande: 20.06.2012
(73) Titulaire: Peugeot Citroën Automobiles SA, 78140 Vélizy Villacoublay (FR)
(72) Inventeur: Chevalier, Philippe, 92500 Rueil Malmaison (FR); Ferrand, Nicolas, 92000 Nanterre (FR); Chapel, Julien, 77380 Combs La Ville (FR)

(56) Documents cités:
- EP-A2- 0 807 749
- EP-A2- 2 148 053
- WO-A1-2008/030314
- US-A1- 2007 122 317
- US-A1- 2009 173 063

## Description

La présente invention est du domaine de l'épuration des gaz d'échappement que produit un moteur thermique, équipant un véhicule automobile notamment, et relève plus particulièrement des modalités de traitement par réduction catalytique sélective de composants nocifs que comportent ces gaz d'échappement. Elle a pour objet une ligne d'échappement équipée d'organes de traitement des gaz d'échappement pour leur épuration préalablement à leur rejet dans l'atmosphère, et une méthode d'épuration des gaz d'échappement mettant en oeuvre une telle ligne d'échappement, notamment par réduction catalytique sélective pour éliminer des oxydes d'azotes qu'ils contiennent.

Dans le domaine automobile, un moteur thermique équipant un véhicule est producteur de gaz d'échappement qui sont rejetés à l'air libre et qui comportent des composants nocifs qu'il est nécessaire de traiter préalablement à leur rejet dans l'atmosphère. Le véhicule est équipé d'une ligne d'échappement qui comprend un conduit de circulation des gaz d'échappement depuis le moteur thermique vers l'extérieur du véhicule automobile, et divers organes pour traiter les gaz d'échappement et les épurer préalablement à leur rejet.

Parmi les composants nocifs à traiter que comprennent les gaz d'échappement, on connaît les oxydes d'azote (NOx, x étant égal à 1 et/ou 2) qui doivent être réduits pour éviter leur rejet à l'air libre. Il est connu d'exploiter un système de réduction catalytique sélective, dénommé SCRS d'après l'acronyme anglais « Selective Catalytic Reduction System », pour réduire les oxydes d'azote en azote et en vapeur d'eau. Un réactif réducteur est injecté dans le conduit en étant mélangé aux gaz d'échappement, ce mélange circulant vers un élément catalyseur spécifique, dénommé élément SCR d'après l'acronyme anglais « Selective Catalytic Reduction », qui est disposé en aval de l'injecteur selon le sens d'écoulement des gaz d'échappement à l'intérieur de la ligne d'échappement. Selon un premier cas, le réactif réducteur comprend de l'urée ou est un précurseur de l'urée ou autre agent analogue. L'urée contenue à l'intérieur du réactif réducteur est dissociée en ammoniac, par pyrolyse à 120°C et par hydrolyse à 180°C, l'ammoniac réduisant en azote et en eau les oxydes d'azote (NOx) contenus dans les gaz d'échappement. Selon un deuxième cas, le réactif réducteur injecté est de l'ammoniac, qui est directement exploité par l'élément SCR pour réduire les oxydes d'azote. L'élément SCR est notamment formé d'un corps agencé en pain, en brique ou autre corps analogue notamment imprégné d'un agent réactif, qui est susceptible d'être placé en amont ou en aval d'un filtre à particules. Selon des agencements déterminés de la ligne d'échappement, une filtration des particules contenues dans les gaz d'échappement est susceptible d'intervenir préalablement ou postérieurement à la mise en oeuvre de l'épuration des gaz d'échappement par le système de réduction catalytique sélective SCRS. Les positions relatives amont et aval entre l'élément SCR et le filtre à particules sur la ligne d'échappement sont choisies en fonction de résultats spécifiquement recherchés et des divers organes de traitement des gaz d'échappement que comporte la ligne d'échappement pour le traitement global des gaz d'échappement.

Les notions amont et aval sont à comprendre au regard du sens d'écoulement des gaz d'échappement le long de la ligne d'échappement depuis le moteur thermique vers le débouché du conduit sur l'environnement extérieur du véhicule.

Parmi les composants nocifs à traiter que contiennent les gaz d'échappement, sont aussi présents les hydrocarbures imbrûlés et le monoxyde de carbone, qui doivent être oxydés pour éviter leur rejet à l'air libre. Il est connu d'exploiter un catalyseur d'oxydation qui comportent un réactif oxydant. Dans des conditions particulières de roulage du véhicule, les oxydes d'azote présents dans les gaz d'échappement peuvent être en partie réduits par le réactif oxydant contenu dans le catalyseur d'oxydation durant les phases de mélange carburé riche, et il est avantageux de placer le catalyseur d'oxydation CO sur la ligne d'échappement en interposition entre le moteur thermique et l'élément SCR.

Pour connaître un environnement technologique proche de celui de la présente invention, on pourra se reporter aux documents EP2042227 (ENGELHARD CORP.), DE10348799 (FORG GLOBAL TECH LLC) et US6401455 (SIEMENS AG) ou encore aux documents WO2008030314A1 et US20090173063A1 qui décrivent des lignes d'échappement et/ou des méthodes mettant en oeuvre un système de réduction catalytique sélective SCRS, pour épurer les gaz d'échappement produits par le moteur thermique d'un véhicule automobile.

La mise en oeuvre d'une méthode d'épuration des gaz d'échappement, exploitant un système de réduction catalytique sélective SCRS, reste délicate en raison d'un ensemble de compromis à trouver entre divers avantages et inconvénients. De tels compromis relèvent notamment de l'organisation de la ligne d'échappement tant au regard des modalités spécifiquement mises en oeuvre pour obtenir une épuration des gaz d'échappement fiable, efficace et à moindres coûts, mais aussi au regard d'autres contraintes relatives à son implantation sur le véhicule et à sa pérennité. Il est aussi à prendre en compte que les besoins d'épuration des gaz d'échappement varient selon les conditions de roulage du véhicule, et notamment selon le régime moteur spécifiquement requis à un instant donné. Il est donc recherché un agencement global de la ligne d'échappement et des méthodes pour sa mise en oeuvre, qui prennent en compte ces divers aspects pour procurer les meilleurs compromis possible.

Une contrainte spécifique réside dans une implantation de l'élément SCR qui soit compatible avec sa mise en coopération avec d'autres organes nécessaires à l'épuration globale des gaz d'échappement qui sont spécifiquement choisis, notamment au regard de leur nombre, de leur nature, de leur agencement propre ou en coopération, et de leur implantation sur la ligne d'échappement. Un compromis doit être trouvé entre cette compatibilité et le choix des divers organes utilisés pour l'épuration des gaz d'échappement, avec la température de fonctionnement de l'élément SCR permettant d'optimiser son fonctionnement, notamment au regard selon le cas de la double réaction à obtenir de dissociation de l'urée injectée et de réduction des oxydes d'azote par l'ammoniac, ou de la réaction unique de réduction des oxydes d'azote par l'ammoniac préalablement injectée. Il est opportun de pouvoir mettre en oeuvre l'un ou l'autre cas d'injection du réactif réducteur à partir d'une même organisation générale de la ligne d'échappement.

Une autre contrainte réside dans la préservation et dans la pérennité des organes qui composent la ligne d'échappement. Par exemple, il est à éviter un encrassement en tout ou partie du conduit d'échappement et/ou des autres organes que comprend la ligne d'échappement, au risque d'altérer son fonctionnement au regard de l'épuration des gaz d'échappement et/ou au risque de nécessiter des opérations de maintenance régulières et/ou coûteuses.

Une autre contrainte réside dans l'obtention d'une ligne d'échappement permettant son implantation aisée sur le véhicule. Une position souhaitable de l'élément SCR sur la ligne d'échappement est au plus proche de la sortie du moteur thermique, en zone dite chaude de la ligne d'échappement lorsque les gaz d'échappement sont à une température élevée. Le volume occupé par l'élément SCR doit être suffisant pour la mise en oeuvre de la dite double réaction à obtenir, ce qui rend cependant son implantation à proximité du moteur thermique délicate en raison de son encombrement. L'implantation sur le véhicule de l'élément SCR en zone dite froide de la ligne d'échappement située notamment en sous-caisse du véhicule, est alors avantageuse pour pouvoir optimiser le volume de l'élément SCR. Cependant, une telle implantation est effectuée au détriment de l'obtention d'une ligne d'échappement compacte et/ou au détriment de l'exploitation de l'extension de la ligne d'échappement pour l'implantation d'autres organes nécessaires, tels que ceux relatifs au traitement acoustique de l'écoulement des gaz d'échappement. En outre, l'implantation du catalyseur de réduction SCR en sous-caisse en une zone éloignée du moteur thermique rend délicate une standardisation de la ligne d'échappement pour des véhicules d'architectures diverses. Il est opportun de placer au mieux les organes que comporte la ligne d'échappement pour le traitement des gaz d'échappement au plus proche de son extrémité amont, pour permettre une adaptation aisée de la ligne d'échappement à de quelconques véhicules d'architectures respectives par simple prolongement du conduit.

Un but de la présente invention est de proposer une ligne d'échappement pour un moteur thermique équipant notamment un véhicule automobile, dont la structure procure des compromis satisfaisants au regard des contraintes précédemment énoncées. Une telle ligne d'échappement est notamment recherchée compacte et peu encombrante, simple de structure et apte à éviter tout rejet de composants nocifs véhiculés par les gaz d'échappement produits par le moteur thermique. La ligne d'échappement est recherchée aisément implantable sur le véhicule automobile et pourvue d'organes de traitement chimique et/ou physique des gaz d'échappement qui sont aisés à installer à l'intérieur de la ligne d'échappement, notamment pour faciliter les opérations d'implantation et de maintenance à moindres coûts. L'organisation de la ligne d'échappement est recherchée permettant sa transposition sur divers véhicules d'architectures respectives prédéfinies, sans nécessiter de modifications structurelles majeures de la ligne d'échappement. La ligne d'échappement est recherchée efficace pour de quelconques conditions de roulage du véhicule automobile, notamment en phase de roulage du véhicule sur autoroute ou en phase d'accélération pour lesquelles un mélange carburé riche est requis pour le moteur thermique, avec pour conséquence un accroissement du volume des agents nocifs à traiter que comportent les gaz d'échappement. La ligne d'échappement est recherchée pouvant être obtenue à moindres coûts, et offrant une pérennité limitant les opérations de maintenance et/ou de remplacement des différents organes qu'elle comporte. Il est notamment recherché d'éviter au mieux un encrassement et/ou une détérioration rapide de la ligne d'échappement.

Un autre but de la présente invention est de proposer une méthode efficace de traitement des gaz d'échappement pour un moteur thermique équipant notamment un véhicule automobile, procurant des compromis satisfaisants au regard de l'ensemble des contraintes qui ont été énoncées.

La ligne d'échappement de la présente invention est une ligne d'échappement pour l'évacuation et le traitement de gaz d'échappement produits par un moteur thermique équipant notamment un véhicule automobile. Cette ligne d'échappement comprend un conduit de circulation des gaz d'échappement depuis le moteur thermique vers un débouché de la ligne d'échappement sur l'extérieur du véhicule automobile. Le conduit est équipé d'organes de traitement chimique et/ou physique des gaz d'échappement, dont au moins un filtre à particules et un système de réduction catalytique sélective, dénommé système SCRS. Ce système SCRS comprend un injecteur d'un réactif réducteur, muni d'un débouché à l'intérieur de la ligne d'échappement, et au moins un élément catalyseur, dénommé élément SCR. Selon un premier cas, le réactif réducteur est de l'urée ou analogue et l'élément SCR procure une réaction de dissociation du réactif réducteur et de réduction d'oxydes d'azote contenus dans les gaz d'échappement à partir de l'ammoniac obtenu. Selon un deuxième cas, le réactif réducteur est de l'ammoniac directement injecté dans la ligne d'échappement, notamment à l'état gazeux, et l'élément SCR procure une réaction de réduction des oxydes d'azote par l'ammoniac préalablement injectée.

Selon la présente invention, une telle ligne d'échappement est principalement reconnaissable en ce que le SCRS comprend au moins deux éléments SCR distincts, dont un élément SCR amont et un élément SCR aval, qui sont structurellement distincts et séparés l'un de l'autre. L'élément SCR amont et l'élément SCR aval sont placés en série sur le conduit à distance l'un de l'autre, en étant séparés par une zone intermédiaire de la ligne d'échappement. Le filtre à particules est placé sur la ligne d'échappement dans la zone intermédiaire, en étant disposé entre l'élément SCR amont et l'élément SCR aval. En outre le système SCRS ne comprend qu'un seul injecteur de réactif réducteur, cet injecteur étant disposé en amont de l'élément SCR amont.

Les notions amont et aval sont à comprendre au regard du sens d'écoulement des gaz d'échappement le long de la ligne d'échappement, depuis son extrémité amont munie de moyens de mise en communication aéraulique avec le moteur thermique vers son extrémité aval opposée munie d'un débouché du conduit sur l'environnement extérieur du véhicule.

La notion de distance de séparation entre l'élément SCR amont et l'élément SCR aval correspond à un écartement sur le conduit qui correspond à une séparation entre les éléments SCR par la zone intermédiaire de la ligne d'échappement, qui reçoit le filtre à particules. Les gaz d'échappement circulent à l'intérieur de cette zone intermédiaire de l'un à l'autre des éléments SCR en traversant au moins le filtre à particules, voire encore une extension du conduit et/ou un mélangeur. Les gaz d'échappement sont successivement acheminés vers l'élément SCR amont, puis vers le filtre à particules et vers l'élément SCR aval SCR2, à travers lesquels les gaz d'échappement circulent à des températures respectives distinctes.

L'élément SCR amont, arrosé par le réactif réducteur injecté, constitue un support de décomposition préalable du réactif réducteur, constitué par de l'urée, un précurseur de l'urée ou autre agent analogue. L'élément SCR aval, séparé de l'élément SCR amont par la zone intermédiaire, est traversé par les gaz d'échappement à une température significativement inférieure. L'élément SCR aval étant à une température moindre que celle de l'élément SCR amont, celui-ci sera amorcé avec un retard, à une température suffisante pour effectuer l'opération de réduction des oxydes d'azote que comportent les gaz d'échappement.

De préférence, l'élément SCR aval est logé à l'intérieur du boîtier recevant le filtre à particules, auquel il est juxtaposé dans le sens d'écoulement des gaz d'échappement à l'intérieur du boîtier. En variante, l'élément SCR aval est logé à l'intérieur d'un boitier distinct de celui logeant le filtre à particules.

Selon une forme de réalisation, l'élément SCR amont est logé à l'intérieur du boîtier, conjointement avec le filtre à particules et le cas échéant l'élément SCR aval.

Un mélangeur est susceptible d'être interposé entre l'élément SCR amont et l'élément SCR aval, en étant placé dans la zone intermédiaire, pour favoriser le mixage des gaz d'échappement en sortie de l'élément SCR amont et pour préserver le filtre à particule d'un effet délétère causées par d'éventuelles projections d'ammoniac qu'ils contiennent en sortie de l'élément SCR amont.

Dans le cas où l'élément SCR amont est disposé à l'intérieur du boîtier, le mélangeur est logé à l'intérieur du boîtier en interposition entre l'élément SCR amont et le filtre à particules.

Le boîtier est notamment placé en zone froide aval de la ligne d'échappement, et plus particulièrement dans le volume aval de la ligne d'échappement.

Selon une autre forme de réalisation, l'élément SCR amont est placé en zone chaude amont de la ligne d'échappement. Le mélangeur est placé en zone froide de la ligne d'échappement en interposition entre l'élément SCR amont et le boîtier logeant le filtre à particules, et plus particulièrement en zone froide située dans le volume longitudinalement médian de la ligne d'échappement.

Les notions de zone chaude et de zone froide de la ligne d'échappement sont à considérer au regard d'une différence relative de températures des gaz d'échappement entre les dites zone chaude et zone froide de la ligne d'échappement lorsqu'ils sont acheminés depuis l'extrémité ou zone amont vers l'extrémité ou zone aval de la ligne d'échappement. Les gaz d'échappement en provenance du moteur thermique sont à une température plus élevée en amont qu'en aval de la ligne d'échappement, la température des gaz d'échappement étant réputée varier naturellement à la baisse depuis l'amont vers l'aval de la ligne d'échappement. En situation d'implantation de la ligne d'échappement sur le véhicule, la zone chaude correspond à une zone amont de la ligne d'échappement proche de la zone moteur du véhicule. La zone froide correspond à une zone longitudinalement médiane et une zone aval de la ligne d'échappement, qui sont situées en sous-caisse du véhicule.

Le débouché de l'injecteur est avantageusement placé en zone chaude amont de la ligne d'échappement.

Dans le cas à l'élément SCR amont est disposé à l'intérieur du boîtier, le débouché de l'injecteur est susceptible d'être placé en zone froide de la ligne d'échappement, et plus particulièrement en zone froide située en zone longitudinalement médiane de la ligne d'échappement. Son implantation sur la ligne d'échappement est rendue aisée, et son emplacement en zone froide de la ligne d'échappement permet de ne pas encombrer la zone moteur du véhicule sur lequel est implantée la ligne d'échappement.

Un mélangeur principal de mixage entre les gaz d'échappement et le réactif réducteur injecté, est susceptible d'être placé sur la ligne d'échappent en aval du débouché de l'injecteur. Selon diverses variantes de réalisation, l'injecteur est un organe d'injection à l'intérieur de la ligne d'échappement, et plus particulièrement à l'intérieur du conduit, d'un réactif réducteur à l'état liquide sous forme de brume et/ou à l'état gazeux. Dans le cas d'une injection du réactif réducteur à l'état liquide, il est nécessaire que l'injecteur soit associé à un mélangeur, pour favoriser un mélange entre les gaz d'échappement et le réactif réducteur. Dans le cas d'une injection du réactif réducteur à l'état gazeux, la présence d'un mélangeur est accessoire quoique préférée, les états gazeux des gaz d'échappement et du réactif réducteur favorisant en soi leur mélange.

Un catalyseur d'oxydation est de préférence placé en zone chaude amont de la ligne d'échappement, en étant disposé en amont de l'élément SCR amont.

Le conduit comporte avantageusement une zone flexible qui est ménagée entre la zone chaude amont et la zone froide de la ligne d'échappement.

L'invention a aussi pour objet une méthode d'épuration de gaz d'échappement circulant à l'intérieur d'une ligne d'échappement telle qu'elle vient d'être décrite. Cette méthode comprend dans sa généralité une opération de traitement chimique des gaz d'échappement par un système de réduction catalytique sélective SCRS apte à éliminer des oxydes d'azote, et une opération de tamisage des gaz d'échappement pour en retenir des particules qu'ils sont susceptibles de comporter.

Selon la présente invention, une telle méthode d'épuration de gaz d'échappement est principalement reconnaissable en ce qu'elle comprend les opérations successives suivantes :
*) une opération d'oxydation des gaz d'échappement,
*) une opération d'injection du réactif réducteur,
*) une première opération de traitement chimique des gaz d'échappement par l'élément SCR amont,
*) une opération de tamisage des gaz d'échappement par le filtre à particules, et
*) une deuxième opération de traitement chimique des gaz d'échappement par l'élément SCR aval.

La méthode comprend avantageusement une opération d'homogénéisation des gaz d'échappement en sortie de l'élément SCR amont, qui est réalisée à l'intérieur de la zone intermédiaire et/ou par le mélangeur. Cette opération d'homogénéisation est notamment effectuée postérieurement à la première opération de traitement chimique des gaz d'échappement par l'élément SCR amont et préalablement à l'opération de tamisage des gaz d'échappement par le filtre à particules.

D'autres caractéristiques et avantages de la présente invention apparaîtront à la lecture de la description de variantes de réalisation qui va être faite en relation avec les figures des planches annexées, dans lesquelles :
La fig.1 est une illustration schématique d'une première variante de réalisation de la présente invention.
La fig.2 est une illustration schématique d'une deuxième variante de réalisation de la présente invention.
La fig.3 est une illustration schématique d'une troisième variante de réalisation de la présente invention.
La fig.4 est une illustration schématique d'une quatrième variante de réalisation de la présente invention.
La fig.5 est une illustration schématique d'une cinquième variante de réalisation de la présente invention.
La fig.6 est une illustration schématique d'une sixième variante de réalisation de la présente invention.

Sur les figures, un moteur thermique 1 d'un véhicule automobile est équipé d'une ligne d'échappement 2 pour permettre l'évacuation et le traitement des gaz d'échappement 3 produits par le moteur thermique 1 vers l'extérieur 4 du véhicule automobile. La ligne d'échappement 2 comporte une extrémité ou zone amont 11 en communication aéraulique avec le moteur thermique 1, et une extrémité ou zone aval 12 comportant un débouché vers l'extérieur 4 du véhicule. Les notions amont et aval sont à comprendre au regard du sens d'écoulement 6 des gaz d'échappement 3 le long de la ligne d'échappement 2, et plus particulièrement à l'intérieur d'un conduit de circulation 5 des gaz d'échappement 3 que comprend la ligne d'échappement 2.

Le conduit 5 canalise la circulation des gaz d'échappement 3 depuis le moteur thermique 1 vers l'extérieur 4 du véhicule automobile, c'est-à-dire à l'air libre. Le conduit 5 comprend depuis le moteur thermique 1 vers l'extérieur 4 du véhicule automobile une zone chaude ZC suivie d'une zone froide ZF. Les notions de zone chaude ZC et de zone froide ZF de la ligne d'échappement 2 sont à considérer au regard d'une différence relative de températures des gaz d'échappement 3 entre les dites zone chaude ZC et zone froide ZF de la ligne d'échappement 2 lorsqu'ils sont acheminés depuis l'extrémité amont 11 vers l'extrémité aval 12 de la ligne d'échappement. Les gaz d'échappement 3 sont plus froids vers l'aval que vers l'amont de la ligne d'échappement 2, en raison d'une inertie thermique de la ligne d'échappement 2 et de son refroidissement procuré par l'air extérieur environnant la ligne d'échappement 2. La zone chaude ZC est notamment située en zone moteur ZM du véhicule et plus particulièrement sous un turbocompresseur T équipant le moteur thermique 1. La zone froide ZF est notamment située en sous-caisse C du véhicule et est placée en aval de la zone chaude ZC. Cette zone froide comprend une extension de la ligne d'échappement 2 incluant sa zone longitudinalement médiane et sa zone aval. Bien que considérées comme zone froide ZF, il sera compris que la zone longitudinalement médiane et la zone aval de la ligne d'échappement 2 sont à des températures significativement distinctes lorsqu'elles sont traversées par les gaz d'échappement 3 en provenance de la zone chaude ZC.

Les gaz d'échappement 3 contiennent des composants nocifs qu'il est nécessaire de traiter chimiquement et/ou physiquement préalablement à leur rejet à l'extérieur du véhicule automobile. Une telle contrainte de traitement des gaz d'échappement 3 est à considérer au regard des réglementations relatives à la préservation de l'environnement, tel que par exemple la directive CEE 90/C81/01 d'homologation d'un véhicule automobile. Un tel traitement des gaz d'échappement 3 est obtenu par la mise en oeuvre d'organes de traitement et de fonctionnement de la ligne d'échappement 2. Sur les variantes de réalisation représentées sur les figures, de tels organes comprennent successivement un catalyseur d'oxydation CO, un injecteur 7, accessoirement un mélangeur principal M, un élément SCR amont SCR1, accessoirement un mélangeur M', un filtre à particules FAP et un élément SCR aval SCR2, qui procurent conjointement et en association un traitement global chimique et/ou physique des gaz d'échappement 3.

L'extrémité ou zone aval 12 de la ligne d'échappement 2 est à comprendre s'achevant après un boîtier 10 logeant au moins le filtre à particules FAP, qui est placé en zone froide ZF de la ligne d'échappement. Plus particulièrement, l'extrémité ou zone aval 12 de la ligne d'échappement 2 est susceptible d'être prolongée par le conduit 5 sans déroger aux règles qui ont été énoncées. Par exemple, un tel prolongement aval du conduit 5 est éventuellement muni d'organes d'atténuation acoustique ou d'écran, ou est ménagé pour adapter la ligne d'échappement 2 à une architecture de véhicule donnée.

Plus particulièrement, les gaz d'échappement 3 contiennent des oxydes d'azote (NOx, x étant égal à 1 et/ou 2) qui sont réduits préalablement à leur rejet à l'extérieur 4 du véhicule automobile. Une telle réduction des oxydes d'azote (NOx) en vapeur d'eau et en azote est réalisée par le réactif réducteur préalablement injecté dans la ligne d'échappement 2 au moyen de l'injecteur 7. Pour obtenir la réduction des oxydes d'azote, le conduit 5 est équipé de l'élément SCR amont SCR1 et de l'élément SCR aval SCR2. Ces éléments SCR sont successivement placés en série et à distance l'un de l'autre sur le conduit 5 en étant séparés l'un de l'autre par une zone intermédiaire ZI de la ligne d'échappement 2. L'élément SCR amont SCR1 est situé en amont de l'élément SCR aval SCR2, le filtre à particule FAP étant interposé entre eux. L'élément SCR aval SCR2 constitue un support pour la réduction des oxydes d'azote (NOx) par de l'ammoniac issu du réactif réducteur qui est le cas échéant préalablement dissocié par l'élément SCR amont SCR1.

La distance de séparation entre l'élément SCR amont SCR1 et l'élément SCR aval SCR2, et la position de l'élément SCR aval SCR2 en zone froide, favorisent le traitement chimique des gaz d'échappement. L'élément SCR aval SCR2 est traversé par des gaz d'échappement qui sont plus froids que lorsqu'ils traversent l'élément SCR amont SCR1. L'amorçage de l'élément SCR aval SCR2 est retardé par rapport à celui de l'élément SCR amont SCR1, ce qui permet d'optimiser le traitement chimique des gaz en deux étapes successives et de dédier l'élément SCR aval SCR2 à la réduction des oxydes d'azote seulement. L'élément SCR aval SCR2 est plus particulièrement exploité dans certaine conditions de roulage du véhicule, telles que sur autoroute ou en cas d'accélération par exemple, conditions pour lesquelles la quantité d'oxydes d'azote contenue dans les gaz d'échappement est accrue.

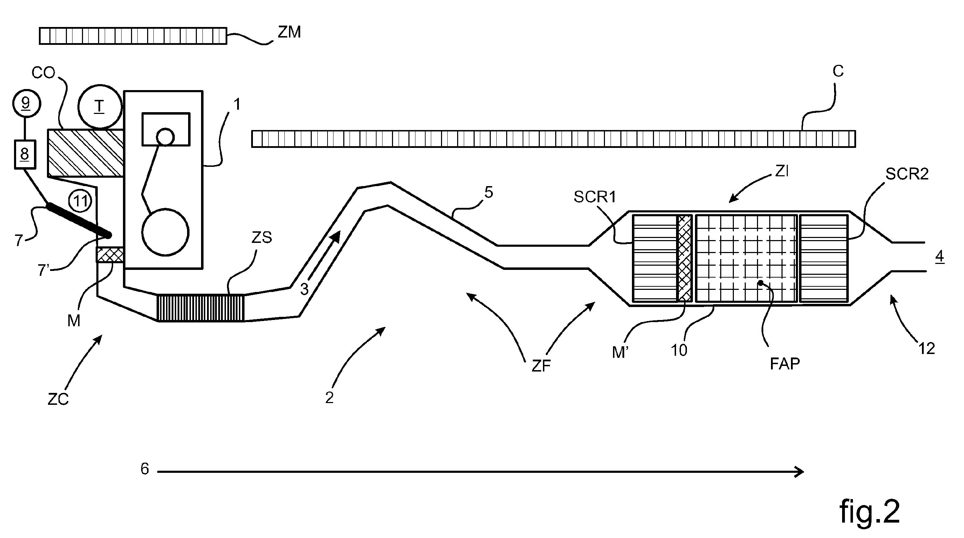

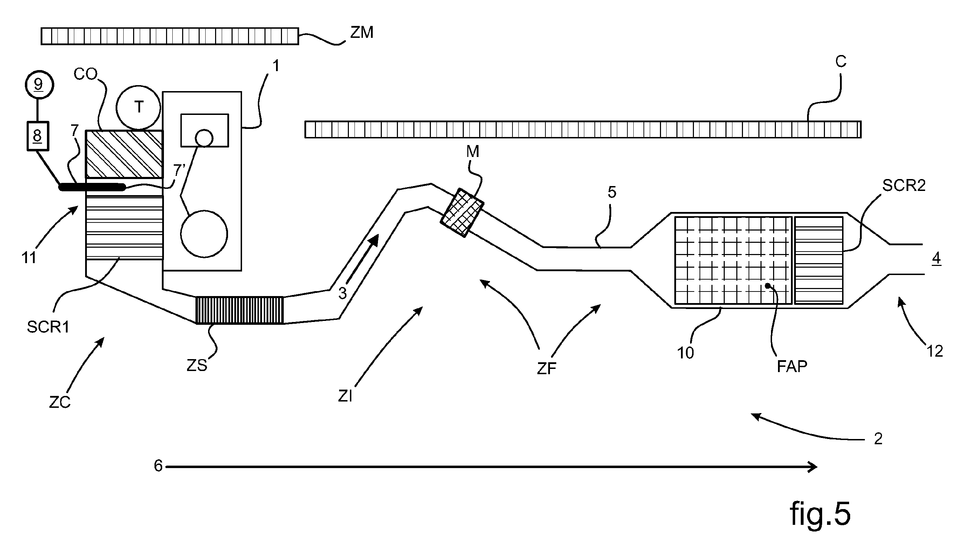

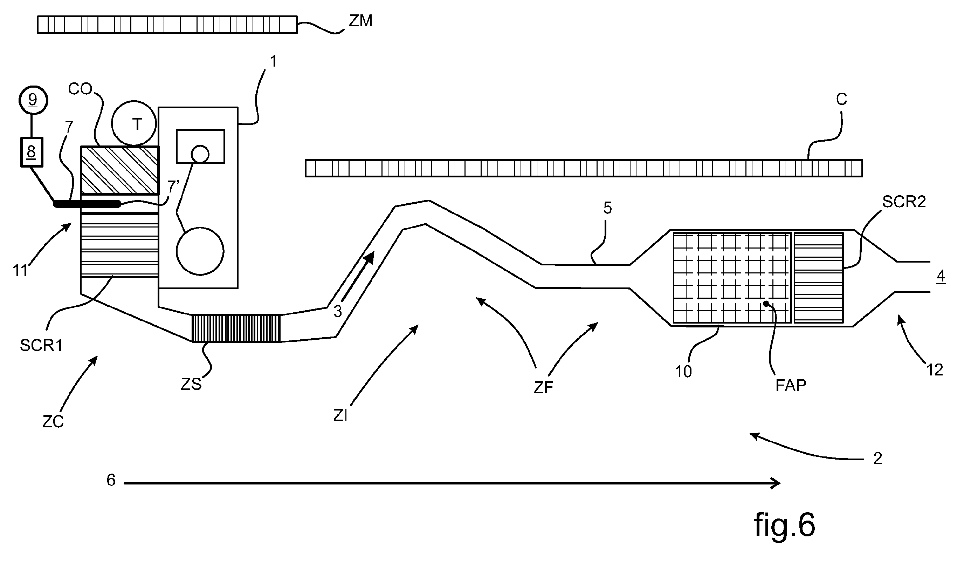

Le réactif réducteur injecté est susceptible d'être de l'urée, un précurseur de l'urée ou analogue. Dans ce cas, l'élément SCR amont SCR1 procure une réaction de dissociation du réactif réducteur et de réduction d'oxydes d'azote contenus dans les gaz d'échappement 3 à partir de l'ammoniac obtenu. Le réactif réducteur est encore susceptible d'être de l'ammoniac directement injecté dans la ligne d'échappement, notamment à l'état gazeux, et les éléments SCR amont SCR1 et aval SCR2 procurent une réaction de réduction des oxydes d'azote par l'ammoniac préalablement injectée. En sortie de l'élément SCR amont, l'ammoniac est mêlé aux gaz d'échappements pour former un mélange homogène qui s'écoule vers le filtre à particules FAP puis vers l'élément SCR amont SCR2. Pour favoriser ce mélange, il est avantageux d'exploiter une extension du conduit, tel qu'illustré sur les fig.5 et fig.6, et/ou le mélangeur tel qu'illustré sur les fig.2, fig.4 et fig.5. La qualité du mélange obtenu entre l'ammoniac et les gaz d'échappement 3 permet de préserver le filtre à particules FAP du vieillissement. Le passage des gaz d'échappement à travers le filtre à particules FAP préalablement à leur passage à travers l'élément SCR aval SCR2 permet d'éviter un encrassement de cet élément et de favoriser son amorçage à basse température de l'ordre de 150°C. L'élément SCR aval SCR2 est plus particulièrement exploité dans certaines conditions de roulage du véhicule, telles que sur autoroute ou en cas d'accélération par exemple, conditions pour lesquelles la quantité d'oxydes d'azote contenue dans les gaz d'échappement est accrue.

La dissociation de la masse globale de l'élément SCR nécessaire au fonctionnement du système SCRS en au moins deux éléments SCR respectivement amont et aval permet de conférer aux éléments SCR multiples de faibles volumes respectifs et de libérer de l'espace dans la zone moteur ZM du véhicule. Cet espace libéré est mis à profit pour recevoir le catalyseur d'oxydation CO qui est avantageusement placé en zone chaude ZC de la ligne d'échappement 2.

Le conduit 5 comporte une zone flexible ZS qui est avantageusement interposée entre la zone chaude ZC et la zone froide ZF de la ligne d'échappement 2. Plus particulièrement, cette zone flexible ZS est ménagée dans la zone longitudinalement médiane de la ligne d'échappement 2, et plus particulièrement en aval de la zone chaude ZC qui est située au plus proche du moteur thermique 1 en situation d'implantation de la ligne d'échappement 2 sur le véhicule. Une telle zone flexible ZS procure l'avantage de faciliter l'extension et le montage de la ligne d'échappement 2 sur le véhicule, et notamment l'extension de la ligne d'échappement 2 entre la zone moteur ZM et la zone de sous-caisse C du véhicule. Les dispositions de l'invention favorisant l'obtention d'un traitement chimique des gaz d'échappement 3 en limitant l'encrassement de la ligne d'échappement 2 malgré la position en zone froide ZF aval du filtre à particules FAP, une telle zone flexible ZS du conduit 5, réputée sensible à l'encrassement, est préservée et peut être exploitée de façon pérenne sans affecter le fonctionnement de la ligne d'échappement.

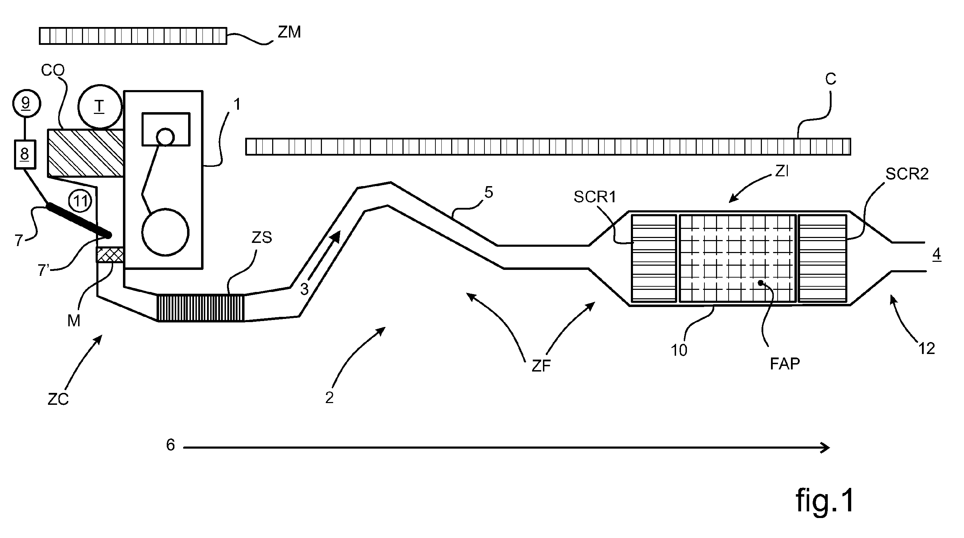

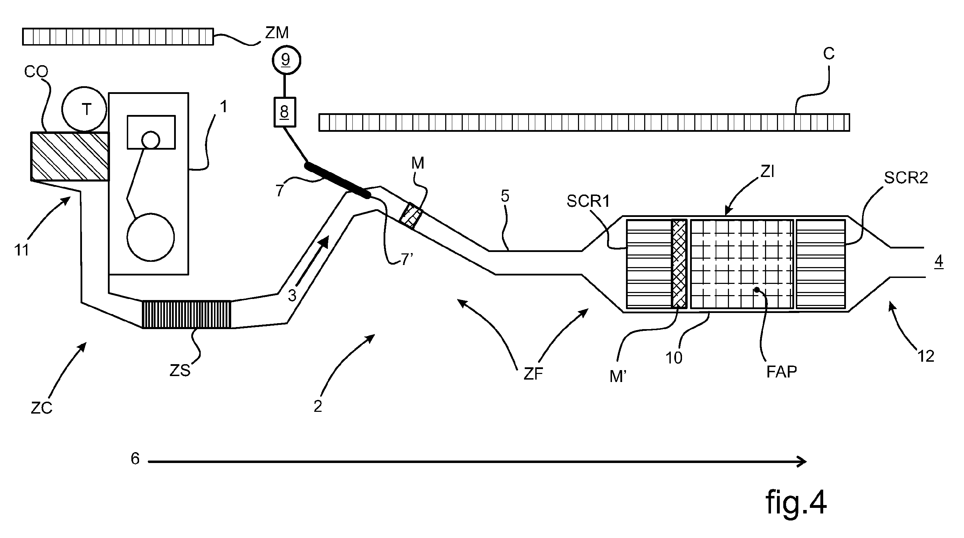

Sur les fig.1 à fig.4, l'élément SCR amont SCR1 est logé dans le boîtier 10, conjointement avec le filtre à particules FAP et l'élément SCR aval SCR2. Sur les formes préférées de réalisation illustrées sur les fig.2 et fig.4, le mélangeur M' est logé dans le boîtier 10, en interposition entre l'élément SCR amont SCR1 et le filtre à particules FAP, pour favoriser le mélange de l'ammoniac avec les gaz d'échappement 3 préalablement à leur passage à travers le filtre à particules FAP. La séparation de l'élément SCR que comprend le système SCRS en deux éléments SCR structurellement distincts et séparés par la zone intermédiaire ZI, procure un fonctionnement satisfaisant du système SCRS malgré leur situation en zone froide ZF de la ligne d'échappement 2, l'élément SCR aval SCR2 étant spécifiquement dédié à la réduction des oxydes d'azote et étant préservé des particules que comportent les gaz d'échappement qui sont préalablement tamisées par le filtre à particules.

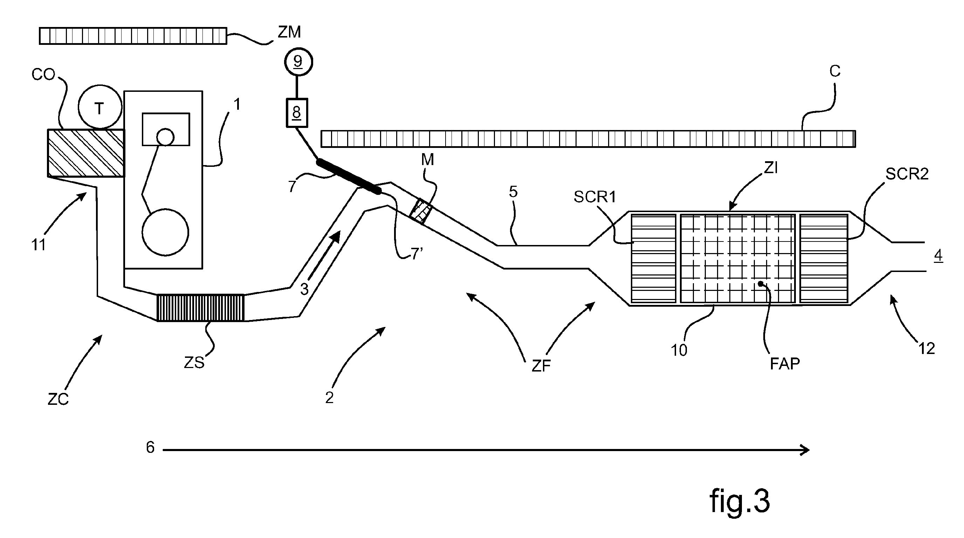

Sur les fig.1 et fig.2, le débouché 7' de l'injecteur 7 est placé en zone chaude ZC, en aval proche du catalyseur d'oxydation CO. Sur les fig.3 et fig.4, le débouché 7' de l'injecteur 7 est placé en zone froide ZF de la ligne d'échappement 2, en amont du boîtier 10 logeant le filtre à particules FAP interposé entre l'élément SCR amont SCR1 et l'élément SCR aval SCR2. La qualité du traitement chimique des gaz d'échappement obtenue permet de placer le débouché 7' de l'injecteur 7 en sous caisse C du véhicule, dans un emplacement facilitant son implantation et libérant de l'espace dans la zone moteur ZM réputée encombrée.

Sur les fig.5 et fig.6, l'élément SCR amont SCR1 est placé en zone chaude ZC de la ligne d'échappement, pour favoriser son amorçage rapide et pour induire un mixage des gaz d'échappement 3 mêlés à l'ammoniac en sortie de l'élément SCR1. Ce mixage est favorisé par une circulation des gaz d'échappement 3 le long de la zone intermédiaire ZI, qui s'étend entre les zone chaude ZC et zone froide ZF aval de la ligne d'échappement 2, en sous caisse C du véhicule en situation d'implantation de la ligne d'échappement 2 sur le véhicule. Sur la fig.5, un mélangeur M' est susceptible d'être interposé sur le conduit 5, dans la zone intermédiaire ZI de la ligne d'échappement 2, pour conforter le mixage obtenu.

Plus spécifiquement, les lignes d'échappement 2 illustrées sur les fig.1 et fig.2 comprennent successivement depuis leur extrémité amont 11 vers leur extrémité aval 12 :
*) à l'intérieur de la zone chaude ZC :
   - le catalyseur d'oxydation CO,
   - le débouché 7' de l'injecteur 7,
   - un mélangeur principal M, notamment dans le cas d'une injection du réactif réducteur à l'état liquide sous forme de brume, voire aussi à l'état gazeux,
   - la zone flexible ZS du conduit 5,
*) à l'intérieur de la zone froide ZF et logés dans le boîtier 10 commun :
   - l'élément SCR amont SCR1,
   - de préférence le mélangeur M' tel que représenté sur la fig.2,
   - le filtre à particules FAP,
   - l'élément SCR aval SCR2.

Plus spécifiquement encore, les lignes d'échappements 2 illustrées sur les fig.3 et fig.4 comprennent successivement depuis leur extrémité amont 11 vers leur extrémité aval 12 :
*) à l'intérieur de la zone chaude ZC :
   - le catalyseur d'oxydation CO,
   - la zone flexible ZS du conduit 5,
*) à l'intérieur de la zone froide ZF
   - le débouché 7' de l'injecteur 7,
   - un mélangeur, notamment dans le cas d'une injection du réactif réducteur à
      l'état liquide sous forme de brume, voire aussi à l'état gazeux.
et logés dans le boîtier 10 commun :
- l'élément SCR amont SCR1,
- de préférence le mélangeur M' tel que représenté sur la fig.4,
- le filtre à particules FAP,
- l'élément SCR aval SCR2.

Plus spécifiquement encore, les lignes d'échappements 2 illustrées sur les fig.5 et fig.6 comprennent successivement depuis leur extrémité amont 11 vers leur extrémité aval 12 :
*) à l'intérieur de la zone chaude ZC :
   - le catalyseur d'oxydation CO,
   - le débouché 7' de l'injecteur 7,
   - le cas échant un mélangeur non représenté, notamment dans le cas d'une injection du réactif réducteur à l'état liquide sous forme de brume, voire aussi à l'état gazeux.
   - l'élément SCR amont SCR1,
   - la zone flexible ZS du conduit 5,
*) à l'intérieur de la zone froide ZF et logés dans le boîtier 10 commun :
   - de préférence le mélangeur M' tel que représenté sur la fig.5,
   - le filtre à particules FAP,
   - l'élément SCR aval SCR2.

L'organisation décrite de la ligne d'échappement 2 permet :
- d'améliorer la compacité de la ligne d'échappement 2, à partir du faible encombrement obtenu pour les éléments SCR amont SCR1 et aval SCR2, et de la possibilité offerte de leurs implantations respectives en des localisations choisies sur la ligne d'échappement 2. De telles localisations correspondent notamment à une implantation de l'élément SCR amont SCR1 en zone chaude et de l'élément SCR aval SCR2 en zone froide, à l'intérieur du boîtier 10 notamment, ou encore à une implantation de l'élément SCR amont SCR1 et de l'élément SCR aval SCR2 dans un boîtier commun 10, la zone intermédiaire ZI les séparant étant mise à profit pour recevoir le filtre à particules FAP et préférentiellement le mélangeur M'.
- de faciliter, grâce aux faibles volumes des éléments SCR amont SCR1 et aval SCR2, une intégration avec un encombrement restreint de l'élément SCR amont SCR1 sous le turbocompresseur T et de l'élément SCR aval SCR2 en sous-caisse C du véhicule, à l'intérieur du boîtier 10 recevant le filtre à particules notamment.
- de rendre indépendantes les localisations des éléments SCR amont SCR1 et aval SCR2 sur le conduit 5, et de rendre possible une implantation sélective de l'élément SCR amont SCR1 en zone chaude ou en zone froide de la ligne d'échappement 2, selon les réactions chimiques qu'ils procurent chacun principalement, tel que par exemple la dissociation de l'ammoniac pour l'élément SCR amont SCR1 et la réduction des oxydes d'azote pour l'élément SCR aval SCR2,
- de permettre une injection du réactif réducteur au plus tôt dans la ligne d'échappement 2, notamment dans une zone la plus chaude possible,
- de procurer l'admission d'un mélange entre les gaz d'échappement 3 et l'ammoniac la plus homogène possible à l'intérieur d'un élément SCR spécifiquement dédié à la réduction des oxydes d'azote, l'élément SCR aval SCR2 notamment,
- de limiter un encrassement de la ligne d'échappement, et notamment d'éviter un encrassement de la zone flexible ZS du conduit 5 et des éléments SCR à partir de leur affectation respective principalement à la dissolution de l'ammoniac et de réduction des oxydes d'azote, et cela malgré la position préférée aval du filtre à particules FAP en zone froide ZF,
- d'induire un amorçage plus rapide de la réduction des oxydes d'azote, par rapport à l'exploitation d'un élément SCR unique placé en zone froide de la ligne d'échappement 2, et notamment en sous-caisse C du véhicule. Un amorçage plus rapide permet un meilleur rendement du catalyseur d'oxydation CO à partir d'une optimisation des points de fonctionnement du moteur thermique 1 et d'une meilleure décomposition du réactif réducteur et/ou de son précurseur,
- de favoriser la décomposition du traitement des gaz d'échappement 3 en deux étapes successives par respectivement l'élément SCR amont SCR1 et l'élément SCR aval SCR2, en raison du fait que l'élément SCR aval SCR2, en étant placé à distance de l'élément SCR amont SCR1, est traversé par des gaz d'échappement 3 plus froids et que son amorçage est retardé par rapport à celui de l'élément SCR amont SCR1.
- d'améliorer la régénération du filtre à particules FAP. L'élément SCR aval SCR2 étant placé en aval du filtre à particules FAP, celui-ci dispose d'une température des gaz d'échappement 3 mieux adaptée en phase de régénération du filtre à particules FAP. Dans le cas où le filtre à particules FAP est imprégné d'un agent additif, l'emplacement de l'élément SCR aval SCR2 en aval du filtre à particules FAP permet de réduire la quantité et la concentration de cet agent additif. Le FAP peut être d'un volume moindre et la quantité de réactif réducteur peut être réduite. L'élément SCR aval SCR2 n'est pas impacté par les particules que comportent les gaz d'échappement, qui sont préalablement tamisés par le filtre à particules FAP avec pour avantage d'améliorer le fonctionnement à faibles températures de l'élément SCR aval SCR2.
- de réduire les pertes de charge le long de la ligne d'échappement 2, notamment à partir d'une limitation obtenue de la longueur d'extension de la ligne d'échappement 2 et de la dissociation de la masse globale d'élément SCR nécessaire au fonctionnement du système SCRS en au moins deux éléments SCR distincts. Une telle dissociation de la masse globale d'élément SCR permet de conférer aux éléments SCR multiples proposés par la présente invention de faibles volumes respectifs, limitant l'obstacle qu'ils forment individuellement à l'encontre de la circulation des gaz d'échappement à leur travers. Selon une variante, une telle dissociation de la masse globale d'élément SCR facilite une localisation de l'élément SCR aval SCR2, et éventuellement de l'élément SCR amont SCR1, en sous-caisse C du véhicule, notamment dans le boîtier 10. Selon une autre variante, une telle dissociation de la masse globale d'élément SCR facilite aussi l'implantation sous le turbocompresseur T de l'élément SCR amont SCR1, à partir de l'utilisation de moyens d'installation du catalyseur d'oxydation CO, de l'injecteur 7 et/ou du mélangeur principal M, tels que des tunnels de passage de ces organes ou analogues,
- d'opérer un rapprochement entre l'élément SCR aval SCR2 et le filtre à particules FAP, pour leur installation en sous-caisse C du véhicule dans la zone froide ZF de la ligne d'échappement 2, sans affecter la qualité du traitement chimique des gaz d'échappement obtenue. Un tel rapprochement permet d'obtenir un ensemble, composé de l'élément SCR aval SCR2 et du filtre à particules FAP, qui est d'un encombrement restreint et qui est obtenu à moindres coûts, sans affecter la qualité recherchée de réduction des oxydes d'azote, y compris pour des conditions de roulage du véhicule induisant une forte concentration des oxydes d'azote dans les gaz d'échappement,
- de procurer une liberté d'agencement de la ligne d'échappement 2 à partir de la mise en oeuvre de deux éléments SCR distincts. Les implantations des organes de traitement de la ligne d'échappement 2 peuvent être localisées au mieux vers l'amont de la ligne d'échappement, avec pour avantage de permettre une standardisation de la ligne d'échappement 2 pour des véhicules d'architectures diverses. Une adaptation de la ligne d'échappement 2 à un véhicule est susceptible d'être limitée à un prolongement du conduit 5 vers l'extrémité aval 12 de la ligne d'échappement 2.
- de permettre une liberté d'implantation sur la ligne d'échappement 2 d'écrans acoustiques à intégrer.

On notera que le filtre à particules FAP et l'élément SCR aval SCR2 sont susceptibles de constituer un élément monobloc assurant les fonctions de filtre et de réduction des oxydes d'azote (NOₓ). Un tel élément monobloc est susceptible d'être constitué d'une unique pièce céramique ou analogue imprégné d'un agent catalyseur de réduction des oxydes d'azote.

Selon une autre forme de réalisation de la présente invention, un élément SCR auxiliaire SCR3 est susceptible d'être interposé entre le catalyseur d'oxydation et le débouché 7' de l'injecteur 7.

Selon diverses approches de réalisation de la présente invention, les organes de traitement et de fonctionnement de la ligne d'échappement 2 qui sont disposés en zone froide ZF sont susceptibles soit d'être confinés à l'intérieur d'un boîtier commun, soit d'être répartis à l'intérieur de plusieurs boîtiers respectifs, séparément ou en association.

## Revendications

1. Ligne d'échappement (2) de gaz d'échappement produits par un moteur thermique (1), cette ligne d'échappement (2) comprenant un conduit (5) de circulation des gaz d'échappement (3) qui est équipé d'organes de traitement chimique et/ou physique des gaz d'échappement (3), dont au moins un filtre à particules (FAP) logé à l'intérieur d'un boîtier (10) placé sur le conduit (5), et un système de réduction catalytique sélective, dénommé système SCRS, comprenant un injecteur (7) d'un réactif réducteur, muni d'un débouché (7') à l'intérieur de la ligne d'échappement (2), et au moins un élément catalyseur, dénommé élément SCR;
le système SCRS comprenant au moins deux éléments SCR distincts, dont un élément SCR amont (SCR1) et un élément SCR aval (SCR2), qui sont placés en série sur le conduit (5) à distance l'un de l'autre en étant séparés par une zone intermédiaire (ZI) de la ligne d'échappement (2), l'amont et l'aval étant définis au regard du sens d'écoulement des gaz d'échappement le long de la ligne d'échappement; et
le filtre à particules (FAP) étant placé sur la ligne d'échappement dans la zone intermédiaire (ZI), en étant disposé entre l'élément SCR amont (SCR1) et l'élément SCR aval (SCR2),
**caractérisée en ce que** le système SCRS ne comprend qu'un seul injecteur (7) de réactif réducteur, cet injecteur (7) étant disposé en amont de l'élément SCR amont (SCR1).

2. Ligne d'échappement (2) selon la revendication 1, **caractérisée en ce que** l'élément SCR aval (SCR2) est logé à l'intérieur du boîtier (10) recevant le filtre à particules (FAP) auquel il est juxtaposé dans le sens d'écoulement des gaz d'échappement à l'intérieur du boîtier (10).

3. Ligne d'échappement (2) selon l'une quelconque des revendications 1 à 2, **caractérisée en ce que** l'élément SCR amont (SCR1) est logé à l'intérieur du boîtier (10).

4. Ligne d'échappement (2) selon l'une quelconque des revendications 1 à 3, **caractérisée en ce qu'**un mélangeur (M') est interposé entre l'élément SCR amont (SCR1) et l'élément SCR aval (SCR2) en étant placé dans la zone intermédiaire (ZI).

5. Ligne d'échappement (2) selon la revendication 4, **caractérisée en ce que** le mélangeur (M') est logé à l'intérieur du boîtier (10), en interposition entre l'élément SCR amont (SCR1) et le filtre à particules (FAP).

6. Ligne d'échappement (2) selon la revendication 4, **caractérisée en ce que** l'élément SCR amont (SCR1) est placé en zone chaude (ZC) amont de la ligne d'échappement (2), et **en ce que** le mélangeur (M') est placé en zone froide (ZF) de la ligne d'échappement en interposition entre l'élément SCR amont (SCR1) et le boîtier (10) logeant le filtre à particules.

7. Ligne d'échappement (2) selon l'une quelconque des revendications 1 à 6, caractérisée en ce le débouché (7') de l'injecteur (7) est placé en zone chaude (ZC) amont de la ligne d'échappement (2).

8. Ligne d'échappement (2) selon l'une quelconque des revendications 4 à 5, caractérisée en ce le débouché (7') de l'injecteur (7) est placé en zone froide (ZF) aval de la ligne d'échappement (2).

9. Ligne d'échappement (2) selon l'une quelconque des revendications 1 à 8, **caractérisée en ce qu'**un catalyseur d'oxydation (CO) est placé en zone chaude (ZC) amont de la ligne d'échappement (2), en étant disposé en amont de l'élément SCR amont (SCR1).

## Patentansprüche

1. Auspuffstrang (2) von Abgasen, die von einer Brennkraftmaschine (1) erzeugt werden, wobei dieser Auspuffstrang (2) eine Leitung (5) zur Zirkulation der Abgase (3) umfasst, die mit Organen zur chemischen und/oder physischen Behandlung der Abgase (3) ausgestattet ist, darunter mindestens ein Partikelfilter (FAP), das im Inneren eines Gehäuses (10), das auf der Leitung (5) platziert ist, untergebracht ist, und ein System zur selektiven katalytischen Reduktion, SCRS-System genannt, das einen Injektor (7) eines Reduktionsreagens umfasst, der mit einer Mündung (7') in das Innere des Auspuffstrangs (2) versehen ist, und mit mindestens einem Katalysatorelement, SCR-Element genannt,
wobei das SCRS-System mindestens zwei separate SCR-Elemente umfasst, darunter ein stromaufwärtiges SCR-Element (SCR1) und ein stromabwärtiges SCR-Element (SCR2), die in Reihe auf der Leitung (5) voneinander beabstandet platziert sind, indem sie von einer Zwischenzone (ZI) des Auspuffstrangs (2) getrennt sind, wobei stromaufwärts und stromabwärts in Bezug auf die Strömungsrichtung der Abgase entlang des Auspuffstrangs definiert sind, und
wobei das Partikelfilter (FAP) auf dem Auspuffstrang in der Zwischenzone (ZI) platziert ist, indem es zwischen dem stromaufwärtigen SCR-Element (SCR1) und dem stromabwärtigen SCR-Element (SCR2) angeordnet ist,
**dadurch gekennzeichnet, dass** das SCRS-System nur einen einzigen Injektor (7) von Reduktionsreagens umfasst, wobei dieser Injektor (7) stromaufwärts des stromaufwärtigen SCR-Elements (SCR1) angeordnet ist.

2. Auspuffstrang (2) nach Anspruch 1, **dadurch gekennzeichnet, dass** das stromabwärtige SCR-Element (SCR2) im Inneren des Gehäuses (10) untergebracht ist, das das Partikelfilter (FAP) aufnimmt, an das es in die Strömungsrichtung der Abgase im Inneren des Gehäuses (10) anschließt.

3. Auspuffstrang (2) nach einem der Ansprüche 1 bis 2, **dadurch gekennzeichnet, dass** das stromaufwärtige SCR-Element (SCR1) im Inneren des Gehäuses (10) aufgenommen ist.

4. Auspuffstrang nach einem der Ansprüche 1 bis 3, **dadurch gekennzeichnet, dass** ein Mischer (M') zwischen das stromaufwärtige SCR-Element (SCR1) und das stromabwärtige SCR-Element (SCR2) eingefügt ist, indem er in der Zwischenzone (ZI) platziert ist.

5. Auspuffstrang (2) nach Anspruch 4, **dadurch gekennzeichnet, dass** der Mischer (M') im Inneren des Gehäuses (10) zwischen das stromaufwärtige SCR-Element (SCR1) und das Partikelfilter (FRP) eingefügt aufgenommen ist.

6. Auspuffstrang (2) nach Anspruch 4, **dadurch gekennzeichnet, dass** das stromaufwärtige SCR-Element (SCR1) in einer warmen Zone (ZC) stromaufwärts des Auspuffstrangs (2) platziert ist, und dass der Mischer (M') in einer kalten Zone (ZF) des Abgasstroms zwischen das stromaufwärtige SCR-Element (SCR1) und das Gehäuse (10), das das Partikelfilter aufnimmt, eingefügt platziert ist.

7. Auspuffstrang (2) nach einem der Ansprüche 1 bis 6, **dadurch gekennzeichnet, dass** die Mündung (7') des Injektors (7) in der warmen Zone (ZC) stromaufwärts des Auspuffstrangs (2) platziert ist.

8. Auspuffstrang (2) nach einem der Ansprüche 4 bis 5, **dadurch gekennzeichnet, dass** die Mündung (7') des Injektors (7) in der kalten Zone (ZF) stromabwärts des Auspuffstrangs (2) platziert ist.

9. Auspuffstrang (2) nach einem der Ansprüche 1 bis 8, **dadurch gekennzeichnet, dass** ein Oxidationskatalysator (CO) in der warmen Zone (ZC) stromaufwärts des Auspuffstrangs (2) platziert ist, indem er stromaufwärts des stromabwärtigen SCR-Elements (SCR1) angeordnet ist.

## Claims

1. An exhaust system (2) for exhaust gases produced by a heat engine (1), this exhaust system (2) including a duct (5) for circulation of the exhaust gases (3) which is equipped with chemical and/or physical treatment elements for the exhaust gases (3), including at least one particulate filter (FAP) housed in the interior of a case (10) placed on the duct (5), and a selective catalytic reduction system, designated SCRS system, including an injector (7) of a reducing reagent, provided with an outlet (7') in the interior of the exhaust system (2), and at least one catalytic element, designated SCR element;
the SCRS system including at least two distinct SCR elements, including an upstream SCR element (SCR1) and a downstream SCR element (SCR2), which are placed in series on the duct (5) at a distance from one another, being separated by an intermediate zone (ZI) of the exhaust system (2), the upstream and the downstream being defined with respect to the direction of flow of the exhaust gases along the exhaust system; and
the particulate filter (FAP) being placed on the exhaust system in the intermediate zone (ZI), being disposed between the upstream SCR element (SCR1) and the downstream SCR element (SCR2),
**characterized in that** the SCRS system only includes a single injector (7) of reducing reagent, this injector (7) being disposed upstream of the upstream SCR element (SCR1).

2. The exhaust system (2) according to claim 1, **characterized in that** the downstream SCR element (SCR2) is housed in the interior of the case (10) receiving the particulate filter (FAP) to which it is juxtaposed in the direction of flow of the exhaust gases inside the case (10).

3. The exhaust system (2) according to any one of claims 1 to 2, **characterized in that** the upstream SCR element (SCR1) is housed in the interior of the case (10).

4. The exhaust system (2) according to any one of claims 1 to 3, **characterized in that** a mixer (M') is interposed between the upstream SCR element (SCR1) and the downstream SCR element (SCR2) by being placed in the intermediate zone (ZI).

5. The exhaust system (2) according to claim 4, **characterized in that** the mixer (M') is housed in the interior of the case (10), in interposition between the upstream SCR element (SCR1) and the particulate filter (FAP).

6. The exhaust system (2) according to claim 4, **characterized in that** the upstream SCR element (SCR1) is placed in the hot zone (ZC) upstream of the exhaust system (2), and **in that** the mixer (M') is placed in the cold zone (ZF) of the exhaust system, in interposition between the upstream SCR element (SCR1) and the case (10) housing the particulate filter.

7. The exhaust system (2) according to any one of claims 1 to 6, **characterized in that** the outlet (7') of the injector (7) is placed in the hot zone (ZC) upstream of the exhaust system (2).

8. The exhaust system (2) according to any one of claims 4 to 5, **characterized in that** the outlet (7') of the injector (7) is placed in the cold zone (ZF) downstream of the exhaust system (2).

9. The exhaust system (2) according to any one of claims 1 to 8, **characterized in that** an oxidizing catalyst (CO) is placed in the hot zone (ZC) upstream of the exhaust system (2), by being disposed upstream of the upstream SCR element (SCR1).
